# EUROPEAN PATENT APPLICATION

(11) **EP 4 751 968 A1**
(43) Date of publication of application: **03.06.2026**
(21) Application number: 25219105.1
(22) Date of filing: 27.11.2025
(51) Int. Cl.: B60K 35/10, B60K 35/22, B60K 35/60, B60K 35/81, B60R 1/00

(54) **CRAWLER VEHICLE**

(30) Priority: 29.11.2024 IT 202400027078
(71) Applicant: PRINOTH S.p.A., 39049 Vipiteno (BZ) (IT)
(72) Inventor: STEINER, Günther, 39049 VIPITENO (BZ) (IT); PAOLETTI, Alberto, 39049 VIPITENO (BZ) (IT); KIRCHMAIR, Martin, 39049 VIPITENO (BZ) (IT)
(74) Representative: Studio Torta S.p.A.

(57) **Abstract**

A crawler vehicle has a frame (2); a driver's cab (3) mounted on the frame (2); a seat (5) for a driver (6) of the crawler vehicle (1) arranged within the driver's cab (3); a plurality of screens (17, 18, 19, 20, 21, 22), each of which is arranged within the driver's cab (3) and is configured to display a screenshot reproducing operational information; a control system (23) configured to control the screenshot displayed by each screen (17, 18, 19, 20, 21, 22); and a user interface (24), which is configured to receive commands from the driver (6) of the crawler vehicle (1) and to transmit said commands to the control system (23), and is arranged at such a distance from the seat (5) so as to be controllable by the driver (6) of the crawler vehicle (1) while said driver (6) is seated on the seat (5).

## Description

### CROSS-REFERENCE TO RELATED APPLICATIONS

This patent application claims priority from Italian patent application no. 102024000027078 filed on November 29, 2024, the entire disclosure of which is incorporated herein by reference.

### TECHNICAL SECTOR

The present invention relates to a crawler vehicle, preferably used for the preparation of ski runs.

### BACKGROUND OF THE INVENTION

As is well known, crawler type vehicles are commonly used to advance along off-road routes for the purpose of transporting goods or people or to carry out a wide range of different jobs, such as preparing the snowpack of ski runs or cleaning beaches, or for agricultural operations.

Typically, each crawler vehicle of a known type comprises a frame, a driver's cab mounted on the frame, and a pair of motorised tracks. In particular, the driver's cab is equipped with a seat for a driver and with a user interface, which is arranged near the seat, comprises a control device to allow the driver to control the crawler vehicle, and allows the display of crawler vehicle operational parameters, such as travel speed or remaining range of the crawler vehicle.

However, as the complexity of the working environment, the tasks to be performed and the crawler vehicle itself continues to increase, more and more information needs to be displayed in modern crawler vehicles and, as a result, currently known user interfaces are inadequate for this purpose.

### OBJECT OF THE INVENTION

An aim of the present invention is to provide a crawler vehicle that mitigates the drawbacks of the prior art disclosed herein.

In accordance with the present invention, a crawler vehicle is provided, preferably for preparing ski runs, the crawler vehicle being configured to advance in a travelling direction and comprising:
- a frame;
- a driver's cab, which is mounted on the frame and comprises a windscreen;
- a seat for a driver of the crawler vehicle arranged within the driver's cab;
- a plurality of screens, each of which is arranged within the driver's cab and is configured to display a screenshot reproducing operational information;
- a control system, which is in communication with each screen and is configured to control the screenshot displayed by each screen; and
- a user interface, which is in communication with the control system, is configured to receive commands from the driver of the crawler vehicle and to transmit said commands to the control system, and is arranged at such a distance from the seat so as to be controllable by the driver of the crawler vehicle while said driver is seated on the seat.

Thanks to the present invention, the driver of the crawler vehicle can display an amount of operational information appropriate to the complexity of the operational circumstances and can manage the screenshots displayed by each screen in a personalized manner while remaining seated in the seat, in the driving position.

In other words, it is not necessary for the driver of the crawler vehicle to stand up from the seat to change the settings of one of the screens, which can be positioned in a position out of the driver's reach when the driver is seated.

In addition, the driver of the crawler vehicle can set the screenshots displayed from each screen based on their preferences and display the operational information they need at any time.

In particular, said operational information comprises operational parameters of the crawler vehicle and/or information about the operations to be performed and/or about characteristics of the environment surrounding the crawler vehicle and/or images captured outside the driver's cab and/or videos captured outside the driver's cab.

In this way, it is possible to provide the driver of the crawler vehicle with all the operational information necessary to facilitate the tasks of said driver.

In particular, the control system is configured to control each screen so as to change the respective screenshot displayed, preferably as a function of commands given by the driver of the crawler vehicle by means of the user interface.

In this way, it is possible to set the configuration of the screenshots displayed by the plurality of screens based on the personal needs of each driver of the crawler vehicle.

In particular, each screen is arranged in the cab so as to maintain an unobstructed view of the driver of the crawler vehicle through a central portion of the windscreen while said driver is seated on the seat.

In this way, it is possible to prevent the plurality of screens from obstructing the driver's view through the windscreen.

In particular, the crawler vehicle comprises at least one acquisition device, which is arranged outside the driver's cab, is in communication with the control system, and is configured to capture videos and/or images so as to provide the driver with a view outside the driver's cab.

In more detail, the at least one acquisition device is facing in a direction substantially opposite to the travelling direction and is configured to capture video and/or images from an exterior lateral portion of the driver's cab; the plurality of screens comprising at least one rear-view screen configured to display said captured video and/or images.

In other words, the rear-view screen is configured to show a view of the external environment similar to a view that the driver of the crawler vehicle would see through a rear-view mirror.

In this way, the rear-view mirrors mounted outside the driver's cab can be replaced with rear-view screens arranged within the driver's cab. In practice, since the rear-view screen is arranged within the driver's cab, it is possible to improve the driver'srear and side visibility as the driver is not forced to look through the driver's cab windows, which can be dirty or foggy and, consequently, can partially obstruct the driver's view outside the cab.

In particular, the at least one rear-view screen is arranged at a lateral portion of the windscreen.

In this way, it is possible to avoid obstructing the driver's view of the crawler vehicle through a central portion of the windscreen.

### BRIEF DESCRIPTION OF THE DRAWINGS

Further characteristics and advantages of the present invention will become clear from the following description of a non-limiting example of embodiment thereof, with reference to the attached Figures, wherein:
- Figure 1 is a side view, with parts removed for clarity and schematised parts, of a crawler vehicle made in accordance with the present invention;
- Figure 2 is a perspective view, with parts removed for clarity and schematised parts, of a detail of the crawler vehicle in Figure 1; and
- Figure 3 is a block diagram of a further detail of the crawler vehicle of Figure 1.

### DETAILED DESCRIPTION OF THE FIGURES

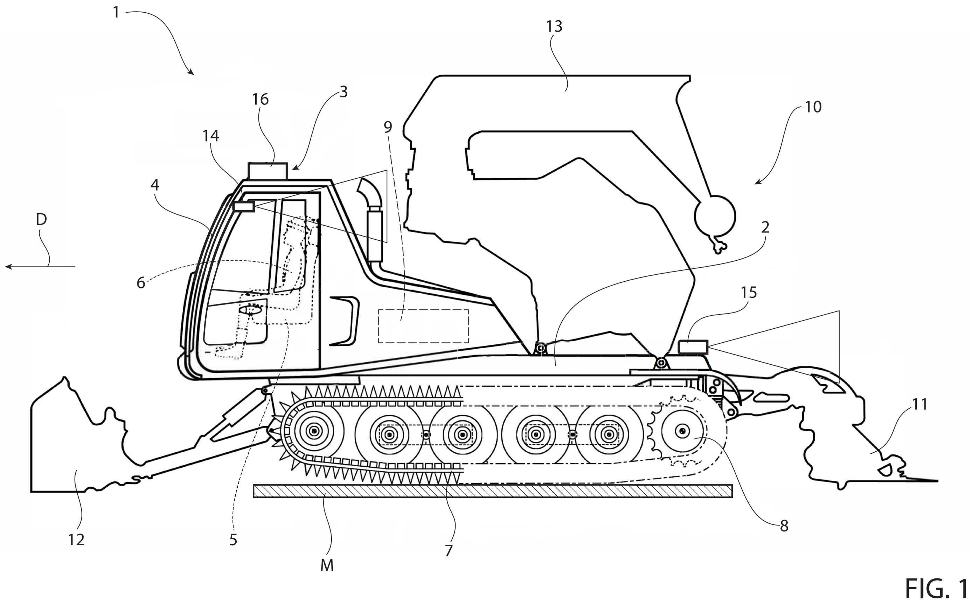

With reference to figure 1, 1 denotes as a whole a crawler vehicle, which in the case shown is used for the preparation of a snowpack M of ski runs. In particular, the crawler vehicle 1 is a snow groomer.

In more detail, the crawler vehicle 1 is used for the preparation of downhill ski runs, and/or cross-country ski runs, and/or ski-jumping ramps, and/or half-pipe ski runs, and/or snow-parks, and/or snowmobile tracks.

In accordance with a further embodiment, the crawler vehicle 1 can be used for the maintenance of sandy areas, such as beaches, or for agricultural operations, such as harvesting and/or handling of agricultural products and/or forage silage and/or bagasse harvesting and/or handling.

In addition, in accordance with a further embodiment not shown in the accompanying figures, the crawler vehicle 1 can comprise a shredder preferably positioned at the front of the crawler vehicle 1 and can be used for shredding vegetation.

In accordance with the present invention, the crawler vehicle 1 is configured to advance in a travelling direction D and comprises a frame 2; a driver's cab 3, which is mounted on the frame 2 and comprises a windscreen 4; and a seat 5 for a driver 6 of the crawler vehicle 1 arranged within the driver's cab 3.

In addition, the crawler vehicle 1 comprises a pair of tracks 7 (only one of which is visible in Figure 1); a pair of drive wheels 8 (only one of which is visible in Figure 1), each of which is coupled to a respective track 7; a propulsion system 9, for example internal combustion or electric or hydrogen-powered, configured to transmit power to the drive wheels 8; and an assembly of accessory devices 10 connected to the frame 2.

In the non-limiting embodiment of the present invention described and shown herein, the assembly of accessory devices 10 comprises a tiller 11, a shovel 12, and a winch 13. It is understood that the crawler vehicle 1 does not necessarily include all of the accessory devices 10 mentioned above. For example, the crawler vehicle 1 may comprise any one or two of the accessory devices 10 selected from the tiller 11, shovel 12 and winch 13.

Furthermore, the crawler vehicle 1 comprises at least one acquisition device 14, 15, which is arranged outside the driver's cab 3 and is configured to capture video and/or images.

In particular, the crawler vehicle 1 comprises a pair of acquisition devices 14 (only one of which is visible in Figure 1), each of which is facing in a direction substantially opposite to the travelling direction D and is configured to capture video and/or images from a respective exterior lateral portion of the driver's cab 3.

In practice, the crawler vehicle 1 has no rear-view mirrors. Each acquisition device 14 is configured to capture video and/or images corresponding to a view of the exterior of the driver's cab 3 that would be viewed by the driver 6 of the crawler vehicle 1 through a rear-view mirror, if any, while said driver 6 is seated on the seat 5.

In particular, the acquisition device 15 is facing in a direction substantially opposite to the travelling direction D and is configured to capture video and/or images from a respective rearward portion of the crawler vehicle 1.

In the non-limiting embodiment of the present invention described and shown herein, the acquisition device 15 is mounted on a rear portion of the crawler vehicle 1, in a retracted position with respect to the direction of travel and/or the drive wheels 8 and/or the winch 13, and is configured to capture videos and/or images of a portion of the snowpack M, preferably already processed, to the rear of the tiller 11.

In accordance with a variant of the present invention, not shown in the accompanying figures, the acquisition device 15 is attached to the tiller 11.

In accordance with an implementation form, each acquisition device 14, 15 comprises a 270° or 360° video camera.

In accordance with a variant of the present invention, each acquisition device 14, 15 comprises a thermographic camera configured to acquire thermographic images and/or thermographic videos of the environment surrounding the crawler vehicle 1.

In one embodiment, each acquisition device 14, 15 comprising a thermographic camera allows one or more of the following to be detected: snow temperature(s); snow humidity; air temperature(s); air humidity; snowpack profile M thanks to the temperature difference between snowpack M and air; distinguishing a worked surface of snowpack M from an unworked surface of snowpack M. The use of the thermographic camera is particularly useful in conditions of poor visibility, such as at night or in foggy conditions.

In accordance with further embodiments of the present invention, not shown in the accompanying figures, each acquisition device 14, 15 may be mounted on the shovel 12 or winch 13 or along a ski run or on an aerial vehicle, preferably unmanned, such as an aerial drone.

In addition, the crawler vehicle 1 comprises a sensor assembly 16 configured to detect operational information comprising operational parameters of the crawler vehicle 1 and/or information about the operations to be performed and/or about the characteristics of the environment surrounding the crawler vehicle 1.

In accordance with embodiments not shown in the accompanying figures, the sensor assembly 16 can be arranged on board additional crawler vehicles or on board an aerial vehicle, preferably unmanned, such as an aerial drone.

In particular, the sensor assembly 16 comprises a range sensor configured to detect a residual range of the crawler vehicle 1; and/or a status sensor configured to detect a state of operation of the propulsion system 9 or the assembly of accessory devices 10; and/or a recognition sensor configured to detect any obstacles around the crawler vehicle 1; and/or a lidar sensor configured to detect characteristics of the snowpack M.

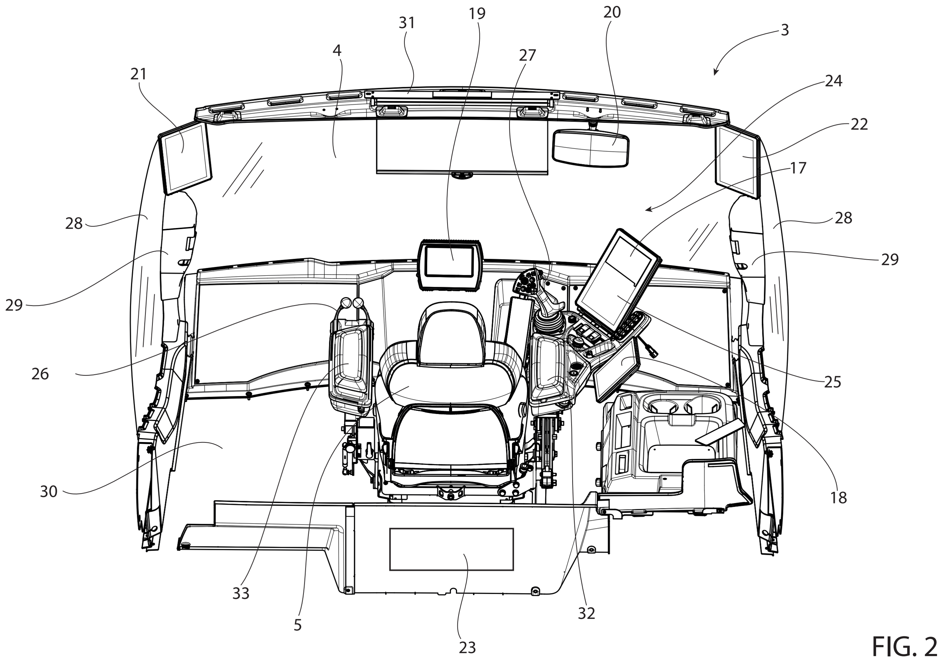

With reference to Figure 2, the crawler vehicle 1 comprises a plurality of screens 17, 18, 19, 20, 21 and 22, each of which is arranged within the driver's cab 3 and is configured to display a screenshot reproducing the operational information; a control system 23, which is in communication with each screen 17, 18, 19, 20, 21, 22 and is configured to control the screenshot displayed by each screen 17, 18, 19, 20, 21, 22; and a user interface 24, which is in communication with the control system 23, is configured to receive commands from the driver of the crawler vehicle 1 and to transmit said commands to the control system 23, and is arranged at such a distance from the seat 5 so as to be controllable by the driver of the crawler vehicle 1 while said driver is seated on the seat 5.

In particular, said operational information comprises operational parameters of the crawler vehicle 1 and/or information about the operations to be performed and/or about characteristics of the environment surrounding the crawler vehicle 1 and/or images captured outside the driver's cab 3 and/or videos captured outside the driver's cab 3.

In more detail, each acquisition device 14, 15 is in communication with the control system 23, which, in particular, it is configured to control each acquisition device 14, 15 and to receive the images and/or videos captured outside the driver's cab 3 from each acquisition device 14, 15.

Furthermore, the sensor assembly 16 is in communication with the control system 23, which, in particular, is configured to control the sensor assembly 16 and to receive the operational information detected by the sensor assembly 16.

In the non-limiting embodiment of the present invention described and shown herein, the user interface 24 comprises a touch sensor 25, which is integrated into the screen 17 and is configured to detect a touch or a swipe on the screen 17. In addition, the user interface 24 comprises a control lever 26 and/or a joystick 27.

In practice, the user interface 24 allows the driver to control the movement of the crawler vehicle 1 and the operation of accessory devices 10. In particular, the control lever 26 and joystick 27 are configured to drive the travelling movement of the crawler vehicle 1 and to control the movements of the accessory devices 10.

In particular, the seat 5 comprises a pair of armrests 32 and 33, to which the user interface 24 is coupled. In more detail, the joystick 27, the screen 18 and the screen 17 in which the user interface 24 is integrated are arranged on the armrest 32. The control lever 26 is arranged on the armrest 33.

In accordance with an embodiment, the driver's cab 3 comprises two lateral windows 28; two lateral uprights 29, each of which is arranged between the windscreen 4 and the respective lateral window 28; a lower platform 30; and a roof 31. In particular, the seat 5 is mounted on the lower platform 30 in a central position of the driver's cab 3.

In accordance with an embodiment not shown in the accompanying figures, the driver's cab 3 comprises further seats for possible passengers of the crawler vehicle 1 arranged alongside the seat 5.

In particular, each screen 17, 18, 19, 20, 21, 22 is arranged in the driver's cab 3 so as to maintain an unobstructed view of the driver of the crawler vehicle 1 through a central portion of the windscreen 4 while said driver is seated on the seat 5.

In more detail, the screens 19, 20, 21 and 22 are arranged at such a distance from the seat 5 as to be unreachable by the driver of the crawler vehicle 1 while said driver is seated on the seat 5.

In the case described and shown herein, the screen 19 is arranged on the lower platform 30 in front of the seat 5 and the screen 20 is hung from the roof 31.

In particular, the screens 21 and 22 are rear-view screens configured to display the videos and/or images captured by the acquisition devices 14, 15.

In more detail, each screen 21, 22 is arranged at a respective lateral portion of the windscreen 4, preferably at respective lateral uprights 29.

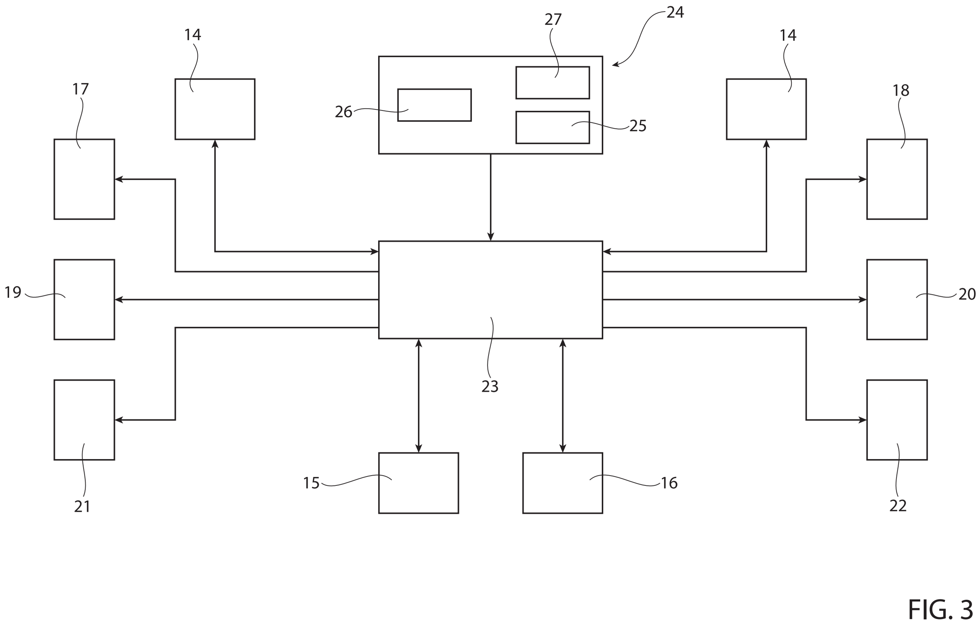

With reference to Figure 3, the control system 23 is configured to control each screen 17, 18, 19, 20, 21, 22 so as to change the respective screenshot displayed as a function of the commands given by the driver of the crawler vehicle 1 by means of the user interface 24.

By way of example, the control system 23 is configured to transfer a certain screenshot containing specific operational information from one screen 17, 18, 19, 20, 21, 22 to the other as a function of the commands given by the driver of the crawler vehicle 1 by means of the user interface 24.

In particular, in use, the user interface 24 receives commands from the driver of the crawler vehicle 1 and transmits said commands to the control system 23. At the same time, the acquisition devices 14, 15 transmit in real time the captured videos and/or images to the control system 23 and the sensor assembly 16 transmits further detected operational information to the control system 23.

At this point, the control system 23 controls the screenshot displayed by each screen 17, 18, 19, 20, 21, 22 as a function of the operational information received from the sensor assembly 16, as a function of the videos and/or images captured by the acquisition devices 14 and 15, and as a function of the commands given by the driver of the crawler vehicle 1 by means of the user interface 24.

In this way, through the user interface 24 the driver of the crawler vehicle 1 can set his preferences regarding the display modes and the configuration of the screenshots displayed by each screen 17, 18, 19, 20, 21, 22 while remaining seated on the seat 5 in the driving position.

It is evident that variants can be made to the present invention without, however, departing from the scope of protection of the appended claims.

## Claims

1. A crawler vehicle, preferably for preparing ski runs, the crawler vehicle (1) being configured to advance in a travelling direction (D) and comprising:
- a frame (2);
- a driver's cab (3), which is mounted on the frame (2) and comprises a windscreen (4);
- a seat (5) for a driver (6) of the crawler vehicle (1) arranged within the driver's cab (3);
- a plurality of screens (17, 18, 19, 20, 21, 22), each of which is arranged within the driver's cab (3) and is configured to display a screenshot reproducing operational information;
- a control system (23), which is in communication with each screen (17, 18, 19, 20, 21, 22) and is configured to control the screenshot displayed by each screen (17, 18, 19, 20, 21, 22); and
- a user interface (24), which is in communication with the control system (23), is configured to receive commands from the driver (6) of the crawler vehicle (1) and to transmit said commands to the control system (23), and is arranged at such a distance from the seat (5) so as to be controllable by the driver (6) of the crawler vehicle (1) while said driver (6) is seated on the seat (5).

2. The crawler vehicle as claimed in claim 1, wherein said operational information comprises operational parameters of the crawler vehicle (1) and/or information about the operations to be performed and/or about characteristics of the environment surrounding the crawler vehicle (1) and/or images captured outside the driver's cab (3) and/or videos captured outside the driver's cab (3).

3. The crawler vehicle as claimed in claim 1 or 2, wherein the control system (23) is configured to control each screen (17, 18, 19, 20, 21, 22) so as to change the respective screenshot displayed, preferably as a function of commands given by the driver (6) of the crawler vehicle (1) by means of the user interface (24).

4. The crawler vehicle as claimed in any one of the foregoing claims, wherein the user interface (24) comprises a touch sensor (25), which is integrated into one of the screens (17; 18; 19; 20; 21; 22) of the plurality of screens (17, 18, 19, 20, 21, 22) and is configured to detect a touch or a swipe on said screen (17; 18; 19; 20; 21; 22).

5. The crawler vehicle as claimed in any one of the foregoing claims, wherein the user interface (24) comprises a control lever (26) and/or a joystick (27).

6. The crawler vehicle as claimed in any one of the foregoing claims, wherein each screen (17, 18, 19, 20, 21, 22) is arranged in the driver's cab (3) so as to maintain an unobstructed view of the driver (6) of the crawler vehicle (1) through a central portion of the windscreen (4) while said driver (6) is seated on the seat (5).

7. The crawler vehicle as claimed in claim 6, wherein at least one of the screens (17, 18, 19, 20, 21, 22) is arranged at such a distance from the seat (5) as to be unreachable by the driver (6) of the crawler vehicle (1) while said driver (6) is seated on the seat (5).

8. The crawler vehicle as claimed in any one of the foregoing claims, and comprising at least one acquisition device (14; 15), which is arranged outside the driver's cab (3), is in communication with the control system (23), and is configured to capture video and/or images.

9. The crawler vehicle as claimed in claim 8, wherein the at least one acquisition device (14; 15) is facing in a direction substantially opposite to the travelling direction (D) and is configured to capture video and/or images from an exterior lateral portion of the driver's cab (3); the plurality of screens (17, 18, 19, 20, 21, 22) comprising at least one rear-view screen (21; 22) configured to display said captured video and/or images.

10. The crawler vehicle as claimed in claim 9, wherein the at least one rear-view screen (21; 22) is arranged at a lateral portion of the windscreen (4).

11. The crawler vehicle as claimed in any one of the foregoing claims, wherein the crawler vehicle (1) is without rear-view mirrors.
